# EUROPÄISCHE PATENTSCHRIFT

(11) **EP 1 562 811 B1**
(45) Veröffentlichungstag und Bekanntmachung des Hinweises auf die Patenterteilung: **12.01.2011**
(21) Anmeldenummer: 03796002.8
(22) Anmeldetag: 07.11.2003
(51) Int. Cl.: B60T 8/1755

(54) **VERFAHREN UND EINRICHTUNG ZUM STABILISIEREN EINES GESPANNS**
METHOD AND SYSTEM FOR STABILIZING A VEHICLE COMBINATION
PROCEDE ET SYSTEME DE STABILISATION D'UN ATTELAGE

(30) Priorität: 08.11.2002 DE 10252510
(43) Veröffentlichungstag der Anmeldung: 17.08.2005
(73) Patentinhaber: Continental Teves AG & Co. oHG, 60488 Frankfurt am Main (DE)
(72) Erfinder: WALDBAUER, Dirk, 65817 Eppstein (DE); KRÖBER, Jürgen, 56333 Winningen (DE)
(86) Internationale Anmeldenummer: PCT/EP2003/050802
(87) Internationale Veröffentlichungsnummer: WO 2004/041612

(56) Entgegenhaltungen:
- EP-A- 0 765 787
- EP-A- 0 989 049
- DE-A- 10 031 266
- DE-A- 19 964 048

## Beschreibung

Die Erfindung betrifft ein Verfahren zum Stabilisieren eines Gespanns, mit einem Zugfahrzeug und einem durch das Zugfahrzeug bewegten Anhänger, bei dem das Zugfahrzeug im Hinblick auf Schlingerbewegungen überwacht wird und beim Erkennen von tatsächlichem oder erwarteten instabilem Fahrverhalten des Zugfahrzeugs oder Gespanns fahrstabilisierende Maßnahmen ergriffen werden.

Das Verfahren zielt darauf ab, die Instabilitäten bei Fahrzeuggespannen (Kraftfahrzeug mit Anhänger), speziell von Kombinationen aus PKW und beliebigen Anhängern, insbesondere Wohnanhängern zu erkennen und auszuregeln, bevor Fahrzustände auftreten, die vom Fahrer nicht mehr beherrscht werden können. Diese instabilen Zustände sind das bei Gespannen bekannte Schlingern und gegenphasige Aufschaukeln von Zugfahrzeug und Anhänger sowie sich anbahnende Überrollzustände bei zu hoher Querbeschleunigung im Falle von Ausweichmanövern, Spurwechseln, Seitenwind, Fahrbahnstörungen oder hastigen Lenkanforderungen durch den Fahrer.

Je nach Fahrgeschwindigkeit können die Schwingungen abklingen, konstant bleiben oder sich verstärken (ungedämpfte Schwingung). Bleiben die Schwingungen konstant, so hat das Gespann die kritische Geschwindigkeit erreicht. Oberhalb dieser Geschwindigkeitsschwelle ist ein Gespann instabil, darunter stabil, d.h. eventuelle Schwingungen klingen ab.

Die Höhe dieser kritischen Geschwindigkeit ist abhängig von den Geometriedaten, den Reifensteifigkeiten, dem Gewicht und der Gewichtsverteilung des Zugfahrzeugs und des Anhängers. Außerdem ist die kritische Geschwindigkeit bei gebremster Fahrt niedriger, als bei Konstantfahrt. Bei beschleunigter Fahrt ist sie wiederum höher als bei konstanter Fahrt.

Entsprechende Verfahren und Vorrichtungen sind in verschiedenen Ausbildungen bekannt (DE 199 53 413 A1, DE 199 13 342 A1, DE 197 42 707 A1, DE 100 34 222 A1, DE 199 64 048 A1).

Aus der DE 197 42 702 C2 ist eine Einrichtung zum Dämpfen von Schlingerbewegungen für mindestens einen von einem Zugfahrzeug gezogenen Anhänger bekannt, bei dem die Winkelgeschwindigkeit des Anhängers um den Momentanpol oder der Knickwinkel um den Momentanpol erfasst und differenziert wird, und zur Regelung der Radbremsen des Anhängers heran gezogen wird. Als Sensoren für die Winkelgeschwindigkeit dienen Beschleunigungsmesser in unterschiedlicher Lage. Die DE 199 64 048 A1 sieht ebenfalls einen Querbeschleunigungssensor oder einen Gierratensensor vor, mittels denen die Schlingerbewegung ermittelt werden soll. Nach Auswertung des Signals soll dem Fahrzeug ein periodisches Giermoment eingeprägt werden. Die DE 100 34 222 A1 ermittelt einen Zeitpunkt zum phasenrichtigen Bremseingriff, der in Abhängigkeit von der Frequenzgröße und der Phasengröße der Schlingerbewegung gebildet wird.

Darüber hinaus ist es aus der EP 0765 787 B1 bekannt, fahrverzögernde Maßnahmen zu ergreifen, wenn die Amplitude einer querdynamischen, innerhalb eines Frequenzbandes schwingenden Fahrzeuggröße einen vorgegebenen Grenzwert überschreitet und wenn eine Lenkbewegungsgröße eine vorgegebene Schwelle nicht überschreitet. Als am Fahrzeug gemessene Fahrzeuggröße wird hier ebenfalls die Querbeschleunigung und/oder die Gierwinkelgeschwindigkeit (Gierrate) herangezogen.

Dabei ist es nötig, den Lenkwinkel in Hinblick auf eine vorgegebene Schwelle zu überwachen, um die fahrzeugverzögernden Maßnahmen nur dann zu ergreifen, wenn der Lenkwinkel möglichst konstant ist.

Zusammenfassend läst sich die Stabilisierungsstrategie aller Ausführungsvarianten wie Folgt zusammenfassen:
- Erkennung des Schlingerns durch Auswertung der Sensorinformationen, wobei sämtliche Sensoren vorteilhaft im Zugfahrzeug oder Anhänger untergebracht sind.
- Bei erkannter instabiler Situation erfolgt ein Abbremsen des Fahrzeugs durch Reduzierung des Motormoments und Druckaufbau in den Radbremsen des Zugfahrzeugs.
- Zusätzlich oder Alternativ erfolgt das Aufbringen eines Moments um die Hochachse des Zugfahrzeugs, welches der vom Anhänger auf das Zugfahrzeug übertragenen Kraft entgegenwirkt und somit die Schwingung bedämpft.

Die Erkennung des Schlingerns eines Gespanns beruht hauptsächlich auf der Tatsache, dass die Gierrate oder Querbeschleunigung einen nahezu sinusförmigen Verlauf zeigt, dessen Frequenz in einem typischen Band liegt, ohne dass der Fahrer entsprechende Lenkbewegungen durchführt, die zu dem beobachteten Quergrößenverlauf führen würden. Problematisch an dieser Erkennungsstrategie ist, dass es noch andere Manöver gibt, die ähnliche Signalverläufe erzeugen. So können z.B. bei Kurvenfahrten mit konstantem Lenkwinkel Aufbauschwingungen entstehen, die ebenfalls sinusförmige Quergrößenverläufe entstehen lassen. Eine weitere Möglichkeit solche Quergrößenverläufe zu erhalten ist, über unebene Straßen zu fahren, insbesondere wellige Fahrbahnen, speziell wechselseitige Bodenwellen.

Der Erfindung liegt die Aufgabe zugrunde, ein Verfahren und eine Einrichtung zu schaffen, die instabiles Fahrverhalten zuverlässig erkennen.

Erfindungsgemäß wird diese Aufgabe dadurch gelöst, dass die Gierwinkelgeschwindigkeit erfasst und die fahrstabilisierenden Maßnahmen in Abhängigkeit von einem Differenzwert gesteuert werden, der aus der erfassten Gierwinkelgeschwindigkeit und einer modellbasierten Gierwinkelgeschwindigkeit gebildet und nach Kriterien ausgewertet wird, die auf ein instabiles Fahrverhalten hinweisen, indem die Frequenz und die Amplitude jeder Halbwelle des Differenzwertes ermittelt, mit gespeicherten Werten verglichen und in Abhängigkeit von dem Vergleichsergebnis die Schlingerbewegung des Gespanns bewertet wird.

Vorteilhaft werden durch das Verfahren schlingernde Gespanne, insbesondere PKW-Anhänger-Gespanne, zuverlässig erkannt. Dabei wird aus der gemessenen Gierrate und der modellbasierten Referenzgierrate ein Differenzwert Δψ̇ generiert, der die Abweichung des Fahrzeugs gegenüber der durch die Lenkradstellung vorgegebenen Bahn repräsentiert. Da dieser Differenzwert nur noch die Abweichung von der gewünschten Bahn darstellt, erfolgt durch die Überwachung des Differenzwertes die Beurteilung von Schwingungen unabhängig von einer durch z.B. Lenkeinschlag durchfahrenen Kurvenbahn. Vorzugsweise wird er Differenzwert in einem Tiefpass-Filter gefiltert um Signalspitzen abzuschneiden, die von der Reibwertermittlung ausgelöst werden. Darüber hinaus werden Fehlerkennungen und damit Fehlanregelungen vermieden. Das Verfahren und die Einrichtung erfordern vorteilhaft nur eine Sensorik die in einer ESP-Fahrstabilitätsregelung vorhanden ist.

Dabei erfolgt über die von einem Drehratensensor gemessenen und in einer ESP Fahrdynamikregelung abgeleiteten und logisch mit der ESP Regelungsstrategie verknüpften Daten, in die Daten eines Kraftfahrzeugs einbezogen werden können, eine Generierung eines Ansteuersignals für einen Elektromotor einer Hydraulikpumpe, die einen Bremsdruck erzeugt und damit die Radbremse des Zugfahrzeugs oder Anhängers betätigt. Alternativ oder zusätzlich kann auch ein Aktuator einer Überlagerungslenkung angesteuert werden. Durch die Einbremsung eines Rades vorzugsweise des Zugfahrzeugs oder durch die Einbremsung aller Räder des Zugfahrzeugs mit gleichem oder unterschiedlichem Bremsdruck entsprechend einer ESP Regelstrategie, können durch Abbau der Fahrzeuggeschwindigkeit und/oder der Seitenkräfte an einem Rad mit erhöhtem Bremsdruck und/oder der Erhöhung der Längskräfte die sensorisch erfassten Instabilitäten des Gespanns korrigiert und die ggf. zu hohe Querdynamik des Gespanns abgebaut werden.

Vorteilhaft erhält man die Schwingungsfrequenz des Gespannsdadurch, dass die Frequenz aus den Nulldurchgängen und der Zeit zwischen zwei Nulldurchgängen der Gierwinkelgeschwindigkeit ermittelt wird.

Die Bedingung zur Erkennung eines schlingernden, instabilen Gespanns wird vorteilhaft durch die Schritte erfüllt: Zählen der Anzahl der Halbwellen des Differenzwertes, bei denen die Amplitude jeder Halbwelle einen Schwellenwert erreicht oder überschreitet, Zählen jeder positiven und negativen Halbwelle der ermittelten Frequenz, wenn jede positive und negative Halbwelle innerhalb eines durch einen oberen und unteren Schwellenwert definierten Bandes liegt und Vergleichen des Werts der gezählten Halbwellen mit einem eine Anzahl von Halbwellen wiedergebenden Schwellenwert, wobei beim Erreichen oder Überschreiten des Schwellenwerts fahrstabilisierenden Maßnahmen eingeleitet werden. Dabei ist vorteilhaft vorgesehen, dass die Bedingungen kontinuierlich erfüllt und die Halbwellen fortlaufend gezählt werden, damit der eine Anzahl von Halbwellen wiedergebende Schwellenwert erreicht bzw. überschritten wird. Der eine Anzahl von Halbwellen wiedergebende Schwellenwert kann vorteilhaft in Abhängigkeit von der Frequenz bestimmt werden, wobei bei kleinen Frequenzen der Schwellenwert bei einer geringeren Anzahl von Halbwellen als bei einer hohen Frequenz erreicht oder überschritten wird.

Weiterhin ist es vorteilhaft, dass der die Amplitude wiedergebende Schwellenwert jeder Halbwelle mindestens in Abhängigkeit von Größen bestimmt wird, die die Geschwindigkeit des Zugfahrzeugs oder Gespanns oder Anhängers repräsentieren. Dabei ist vorgesehen, dass bei Größen, die eine hohe Geschwindigkeit beschreiben, der Schwellenwert bei geringeren Amplituden als bei Größen, die eine geringe Geschwindigkeit beschreiben, erreicht oder überschritten wird.

Um zu vermeiden, dass der Regler (ESP-Fahrstabilitätsregler) ständig aktiviert und wieder deaktiviert wird, werden nur eine aufeinanderfolgende Anzahl von Halbwellen der Gierwinkelgeschwindigkeit gezählt, bei denen die Amplitude jeder Halbwelle einen Eintrittsschwellenwert erreicht oder überschreitet und dass beim Erreichen oder Unterschreiten nur eines Austrittsschwellenwerts, der unterhalb des Eintrittsschwellenwerts liegt, die fahrstabilisierenden Maßnahmen beendet werden.

Eine bevorzugte Ausführungsform der Erfindung sieht vor, dass die Daten aus dem Verlauf des Differenzwerts gebildet werden. Dabei wird die modellbasierte Gierwinkelgeschwindigkeit in einem Fahrzeugmodell berechnet, das vorteilhaft Bestandteil einer ESP-Fahrstabilitätsregelung ist. In dem Fahrzeugmodell, insbesondere dem Einspurmodell, wird die Modellgierrate im wesentlichen aus dem Lenkwinkel, der Querbeschleunigung und der Fahrzeuggeschwindigkeit (Fahrzeugreferenzgeschwindigkeit) gebildet.

Überraschend hat sich gezeigt, dass bei schnellen Lenkwinkeländerungen, d.h. bei hohen Lenkwinkelgeschwindigkeiten, Abweichungen im Fahrzeugmodell generiert werden, die zu einem Signalverlauf führen, der mit dem beobachteten Signalverlauf beim Schlingern des Gespanns verwechselbar ist. Es wird vermutet, dass diese Abweichungen in den Reaktionszeiten der Signalgenerierung einerseits und der verzögerten Fahrzeugreaktion andererseits zu suchen sind. Um diese Fehlerkennungen zu vermeiden, ist vorgesehen, dass der Differenzwert mit einem Wert, insbesondere einem Faktor, gewichtet wird, der in Abhängigkeit von der Lenkwinkelgeschwindigkeit oder der Lenkwinkelbeschleunigung oder vorzugsweise der Modell- bzw. Referenzgierratenabweichung gebildet wird. Denn es hat sich herausgestellt, dass die Modellgierratenabweichung bzw. Modellgierratengeschwindigkeit zum Filtern des Differenzwertes am geeignetsten ist, da in sie die Fahrzeuggeschwindigkeit vRef und die Lenkwinkelgeschwindigkeit δ̇ eingehen.

Eine besonders vorteilhafte Ausbildung des Verfahrens sieht vor, dass die Querbeschleunigung erfasst und der Verlauf der Querbeschleunigung nach Kriterien ausgewertet wird, die eine Plausibilitätsüberprüfung der Daten ermöglicht, die aus dem Verlauf des Differenzwerts gewonnen und nach Kriterien ausgewertet werden, die auf ein instabiles Fahrverhalten hinweisen.

Die Plausibilität wird überprüft, indem die Maximal- und Minimalwerte der Querbeschleunigung und deren zeitlichen Abstände ermittelt, die Frequenz bestimmt und mit der Frequenz des Differenzwerts verglichen wird.

Die Plausibilität wird zusätzlich überprüft und das Verfahren beendet bzw. die fahrstabilisierenden Maßnahmen abgebrochen, wenn mindestens eine der folgenden Bedingungen erfüllt ist:
Die Frequenz aus einem Quersignal bzw. einer Quergröße, wieder Querbeschleunigung und/oder dem Differenzwert, erreicht oder über- bzw. unterschreitet einen oberen oder unteren Schwellenwert;
Die Frequenz aus dem Quersignal verändert sich relativ zur Frequenz aus dem Differenzwert hin zu einem oberen oder unteren Grenzwert;
Der Absolutwert des Mittelwerts des Quersignals überschreitet einen Schwellenwert;
Die Amplitude des Quersignals verringert sich mit großem Gradienten;
Die Differenz zwischen den Maximal- und Minimalwerten des Quersignals liegt in einem schmalen Band.

Da bei schlingernden Gespannen die Phasenverschiebung klein ist, ist vorteilhaft vorgesehen, dass die Phasenverschiebung zwischen der Querbeschleunigung und dem Differenzwert ermittelt und nach Kriterien bewertet wird, die eine Bestimmung von Fahrsituationen ermöglichen.

Vorteilhaft ist, dass beim Überschreiten eines Schwellenwerts, der eine große Phasenverschiebung wiedergibt, ein Abbruch der fahrstabilisierenden Maßnahmen bzw. eine Beendigung des Verfahrens eingeleitet wird.

Gegenstand der Erfindung ist ferner eine Einrichtung zum Stabilisieren eines Gespanns gemäß dem unabhängigen Anspruch 16.

Ein Ausführungsbeispiel der Erfindung ist in den Zeichnungen dargestellt und wird im Folgenden näher beschrieben.

Es zeigen:
- Fig. 1.: ein Fahrzeug mit ESP Regelungssystem
- Fig. 2: den Signalverlauf des Differenzwertes des schwingenden Zugfahrzeugs
- Fig. 3: die Signale eines schwingenden Zugfahzeugs
- Fig. 4: ein vereinfachtes Ablaufschema der Regelung Fig. 5 ein vereinfachtes Blockschaltbild zur Berechnung von dem Differenzwert Δψ̇

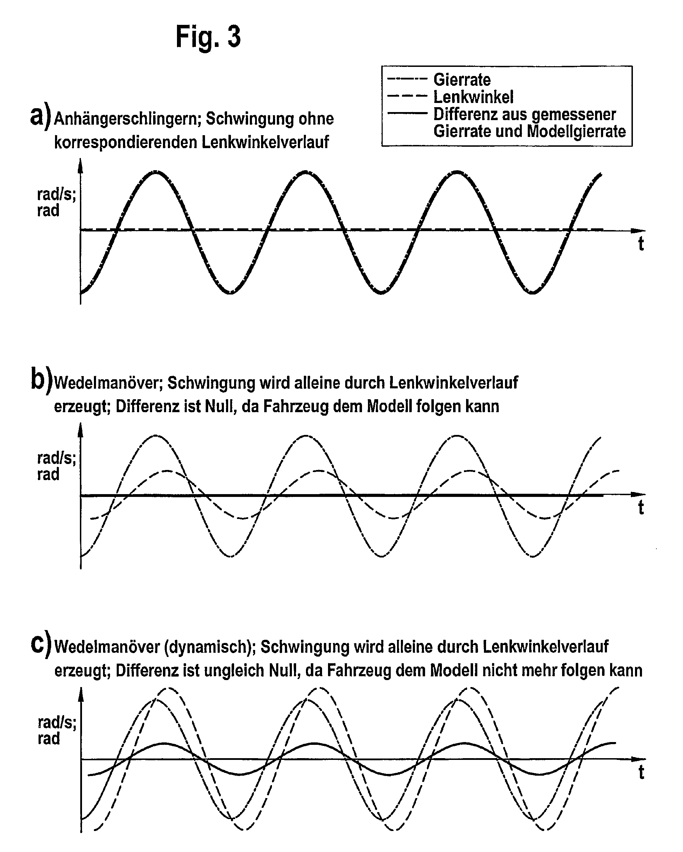

Bevor auf das eigentliche Verfahren eingegangen wird, soll anhand der Figur 3 schematisch der Signalverlauf der Schwingung der Gierrate (Strich-Punkt), des Lenkwinkels (Strich-Strich) und des Differenzwerts aus gemessener Gierrate und Modell- oder Referenzgierrate in Abhängigkeit von einem Wedelmanöver bzw. slalomartigen Ausweichen von Hindernissen erläutert werden. Der Signalverlauf a) zeigt einen sinusförmigen Verlauf der Gierrate ψ̇ und des Differenzwertes Δψ̇ aus Modellgierrate und gemessener Gierrate ohne dass der Fahrer lenkt. Ohne korrespondierenden Lenkwinkelverlauf ist der Verlauf der Gierrate und der Differenzwert aus gemessener Gierrate und modellbasierter Gierrate nahezu gleich.

Figur 3 b) stellt den Signalverlauf dar, der z.B. bei einem Wedelmanöver entsteht, wenn die Schwingung allein durch den Lenkwinkelverlauf erzeugt wird, bei dem das Fahrzeug dem im Fahrzeugmodell abgebildeten Fahrverhalten des Fahrers folgen kann. Hier ist der betrachtete Differenzwert Null, da keine Abweichung zwischen gemessener Gierrate und modellbasierter Gierrate ermittelt wird; das Fahrzeug folgt dem vom Fahrer vorgegebenen Lenkwinkel.

Figur 3 c) zeigt den Signalverlauf bei dynamischen Wedelmanövern. Hier wird die Schwingung allein durch den Lenkwinkelverlauf aufgrund der schnellen Lenkwinkeländerungen, d.h. bei hohen Lenkwinkelgeschwindigkeiten, erzeugt. Der sinusförmige Verlauf des Differenzwertes beruht dabei im wesentlichen darin, dass das Fahrzeug dem Fahrzeugmodell nicht mehr folgen kann; d.h. die im Fahrzeugmodell ermittelte Modellgierrate stimmt mit der gemessen Gierrate nicht mehr überein, da das Fahrzeug die dynamischen Lenkwinkeländerungen nicht mehr sofort umsetzen kann.

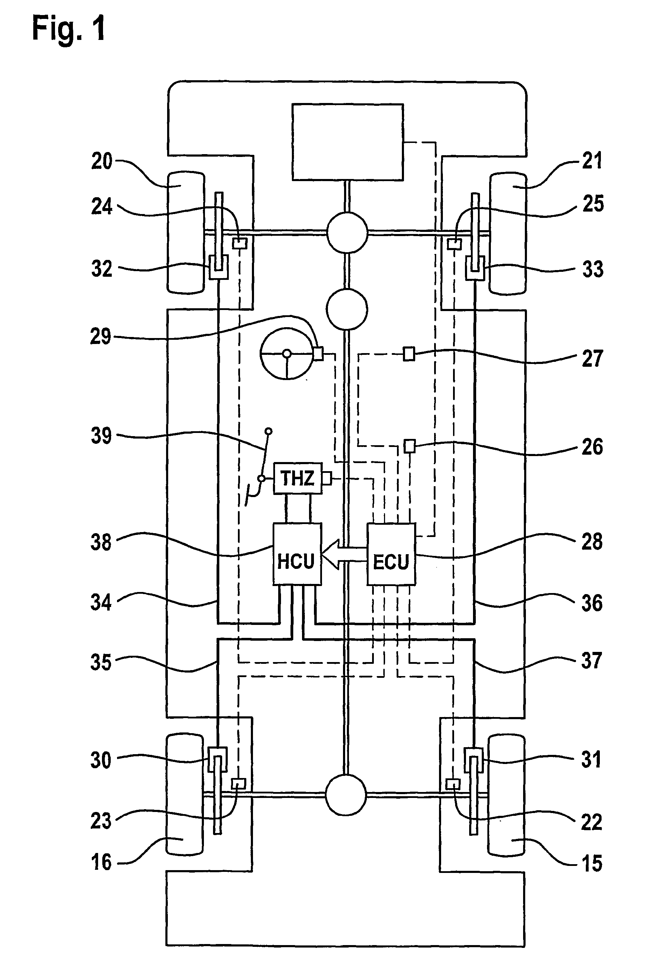

In den Fig. 1 ist ein Fahrzeug mit ESP-Regelungssystem, Bremsanlage, Sensorik und Kommunikationsmöglichkeiten schematisch dargestellt. Die vier Räder sind mit 15, 16, 20, 21 bezeichnet. An jedem der Räder 15, 16, 20, 21 ist je ein Radsensor 22 bis 25 vorgesehen. Die Signale werden einer Elektronik-Steuereinheit 28 zugeführt, die anhand vorgegebener Kriterien aus den Raddrehzahlen die Fahrzeuggeschwindigkeit vermittelt. Weiterhin sind ein Gierratensensor 26, ein Querbeschleunigungssensor 27 und ein Lenkradwinkelsensor 29 mit der Komponente 28 verbunden. Jedes Rad weist außerdem eine individuell ansteuerbare Radbremse 30 bis 33 auf. Diese Bremsen werden hydraulisch betrieben und empfangen unter Druck stehendes Hydraulikfluid über Hydraulikleitungen 34 bis 37. Der Bremsdruck wird über einen Ventilblock 38 eingestellt, wobei der Ventilblock von elektrischen Signalen Fahrer unabhängig angesteuert wird, die in der elektronischen Steuereinheit 28 erzeugt werden. Über ein von einem Bremspedal betätigten Hauptzylinder kann von dem Fahrer Bremsdruck in die Hydraulikleitungen eingesteuert werden. In dem Hauptzylinder bzw. den Hydraulikleitungen sind Drucksensoren P vorgesehen, mittels denen der Fahrerbremswunsch erfaßt werden kann. Über eine Schnittstelle(CAN) ist die Elektronik-Steuereinheit mit dem Motorsteuergerät verbunden

Über das ESP-Regelungssystem mit Bremsanlage, Sensorik und Kommunikationsmöglichkeiten das die Ausstattungselemente
- vier Raddrehzahlsensoren
- Drucksensor (Bremsdruck im Hauptzylinder *pₘₐᵢₙ*)
- Querbeschleunigungssensor (Querbeschleunigungssignal *aᵢₛₜ*, Querneigungswinkel α)
- Gierratensensor (ψ̇)
- Lenkradwinkelsensor (Lenkwinkel δ, Lenkwinkelgeschwindigkeit δ̇
- individuell ansteuerbare Radbremsen
- Hydraulikeinheit (HCU)
- Elektronik-Steuereinheit (ECU)
aufweist, lässt sich eine Aussage über die jeweilige Fahrsituation und damit über eine Bestimmung der Ein- und Austrittsbedingungen eine aktivierte bzw. deaktivierte Regelungssituation realisieren. Damit ist eine Hauptkomponente des Verfahrens zur Stabilisierung von Gespannen, die Fahrsituationserkennung, möglich, während die andere Hauptkomponente, die Interaktion mit dem Bremssystem, ebenfalls auf die wesentlichen Komponenten der Fahrstabilisationsregelung zurückgreift.

Ein konventioneller ESP-Eingriff dient dazu, durch gezielte Eingriffe an den einzelnen Bremsen eines Fahrzeugs ein zusätzliches Drehmoment zu schaffen, welches die tatsächlich gemessene Gierwinkeländerung pro Zeiteinheit (Ist-Gierrate Ψ̇*ᵢₛₜ*) eines Fahrzeugs zu der von dem Fahrer beeinflussten Gierwinkeländerung pro Zeiteinheit (Referenz- bzw. Modell- bzw. Soll-Gierrate Ψ̇*ₛₒₗₗ*) hinführt. Dabei werden die Eingangsgrößen, welche aus der von dem Fahrer gewünschten Kurvenbahn resultieren, einer Fahrzeugmodellschaltung zugeführt, welche anhand des bekannten Einspurmodells oder eines anderen Fahrmodells aus diesen Eingangsgrößen und für das Fahrverhalten des Fahrzeugs charakteristischen Parametern, aber auch durch die Eigenschaften der Umgebung vorgegebenen Größen eine Modellgierrate (Ψ̇ₛₒₗₗ), bestimmt, die mit der gemessenen tatsächlichen Gierrate (Ψ̇ᵢₛₜ) verglichen wird. Die Differenz der Modell-/Ist-Gierrate (ΔΨ̇) wird mittels eines sogenannten Giermomentreglers in ein zusätzliches Giermoment M_{G} umgerechnet, welches die Eingangsgröße einer Verteilungslogik bildet.

Eine Verteilungslogik bestimmt wiederum, ggf. in Abhängigkeit von einem einen bestimmten Bremsdruck an den Radbremsen anfordernden Bremswunsch des Fahrers, den an den einzelnen Bremsen aufzubringenden Bremsdruck. Dieser soll zusätzlich zu der gegebenenfalls erwünschten Bremswirkung noch ein zusätzliches Drehmoment an dem Fahrzeug erzeugen, welches das Fahrverhalten des Fahrzeugs in Richtung des Lenkwunsches des Fahrers unterstützt.

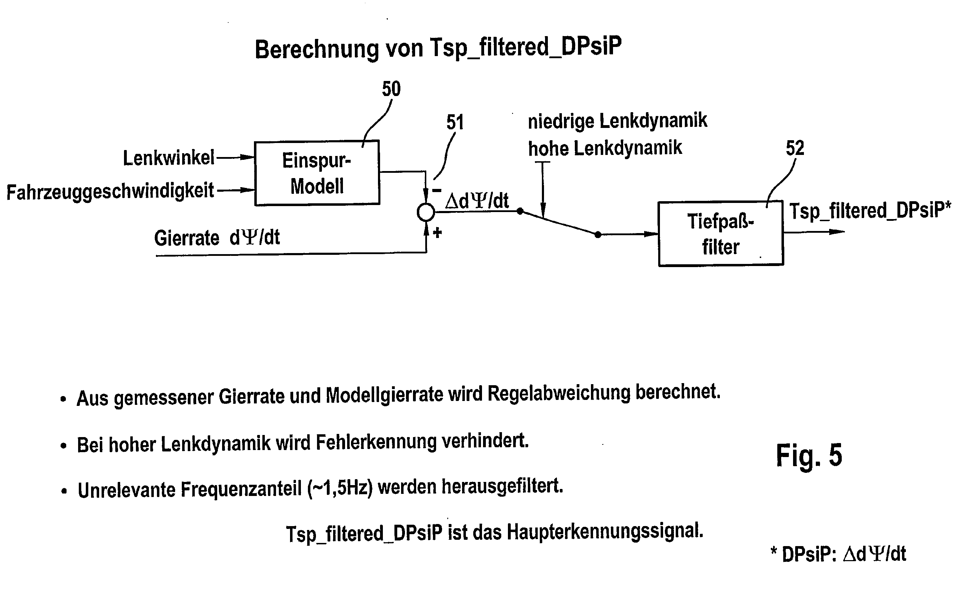

Figur 5 zeigt schematisch den Teil der ECU 28, in dem die Berechnung des Differenzwerts Δψ̇ erfolgt. Die ECU 28 weist ein Fahrzeugmodell 50 zum Bilden einer Modellgierrate auf. Dem Fahrzeugmodell 50 wird mindestens der Lenkwinkel und die Fahrzeuggeschwindigkeit vRef zugeführt; weitere Daten die in das Modell eingehen können sind die Querbeschleunigung, die gemessene Gierrate und ein in einer Reibwert- und Situationserkennung ermittelter Reibwert. Aus den Eingangssignalen wird in dem Modell die Modellgierrate gebildet. In der Ermittlungseinheit 51 wird die Modellgierrate mit der mit dem Gierratensensor 26 erfassten Gierrate verglichen und aus der Gierrate und der Modellgierrate der Differenzwert ermittelt. Der Differenzwert Δψ̇/ dt wird von einem in Abhängigkeit von der Modellgierratenänderung gebildeten Faktor gewichtet und in dem Filter 52 gefiltert. Der Faktor ≠ 0 verhindert dabei die in Zusammenhang mit Fig. 3c) beschriebene Fehlerkennung.

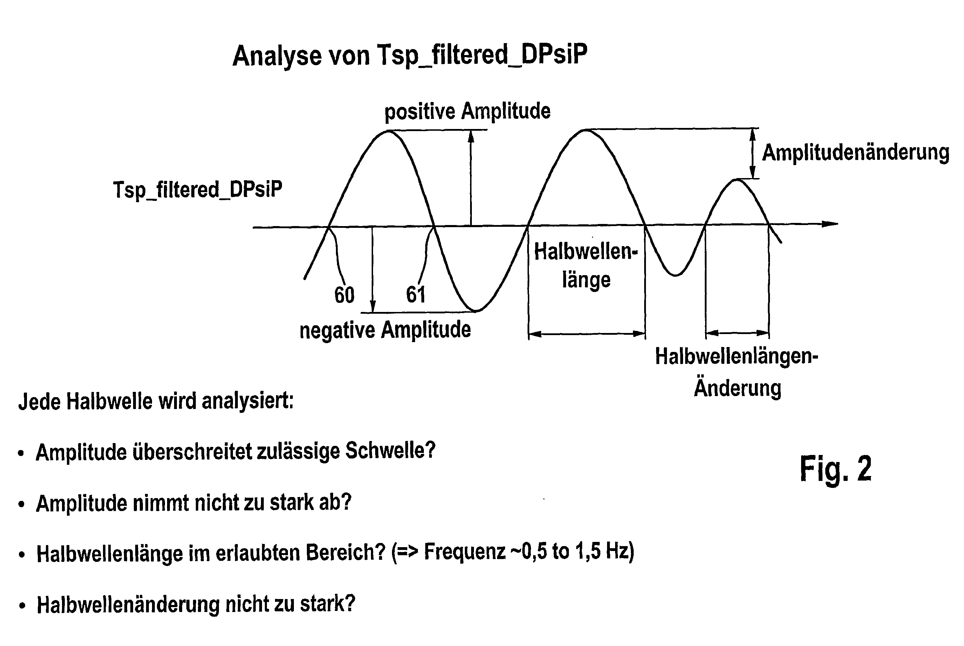

In Figur 2 ist der Signalverlauf des Differenzwertes eines schwingenden Zugfahrzeugs abgebildet.

Als erstes Bestandteil der Erkennung beinhaltet das Verfahren ein Modul zur Analyse des Verlaufs der Differenz der Modell-/Ist-Gierrate ΔΨ̇. Das Modul detektiert Nulldurchgänge 60, 61 des zur Analyse heranzuziehenden Differenzwertes zwischen Modellgierrate und gemessener Gierrate und ermittelt die Zeit zwischen zwei Nulldurchgängen. Dadurch erhält man die Schwingungsfrequenz. Eine Halbwelle wird nur dann als gültig erkannt, wenn die ermittelte Frequenz innerhalb eines typischen Bands liegt (ca. 0,5-1,5 Hz). Weiterhin ist eine Halbwelle nur dann gültig, wenn die Amplitude zwischen zwei Nulldurchgängen eine bestimmte Schwelle überschritten hat. Die Anzahl der gültigen Halbwellen wird gezählt. Überschreitet die Anzahl der gültigen Halbwellen einen Schwellenwert, ist die Differenzwert-Bedingung zur Erkennung eines schlingernden Gespanns erfüllt.

Durch Beobachtung der Differenz zwischen Modellgierrate und gemessener Gierrate werden Lenkbewegungen des Fahrers direkt im Erkennungssignal berücksichtigt. Führt der Fahrer z.B. ein Wedelmanöver bei niedriger Fahrzeuggeschwindigkeit mit geringer Lenkwinkelgeschwindigkeit durch, so zeigt zwar die gemessene Gierrate einen Verlauf, der auf ein schlingerndes Gespann schließen lassen könnte, die Modelgierrate zeigt jedoch beim Wedeln den gleichen Verlauf, sodass das Differenzsignal nahe Null ist, und eine Fehlerkennung ausgeschlossen wird. Durch diese Ausgestaltung der Methode werden somit Fehlerkennungen durch Wedeln vermieden. Zusätzlich wird durch diese Methode eine Erkennung schlingernder Gespanne in der Kurve vereinfacht. Bei Kurvenfahrt erhält die Gierrate einen Offset, sodass die Schwingung nicht mehr um den Nullpunkt schwingt, sondern um diesen Offset. Dadurch ist eine Erkennung erschwert. Verwendet man jedoch die Differenz zwischen Modellgierrate und gemessener Gierrate (Gierwinkelgeschwindigkeit), so wird dieser Offset kompensiert. Das Erkennungssignal schwingt somit immer um Null.

Eine weitere besonders vorteilhafte Ausgestaltung des Verfahrens sieht vor, dass die Regelabweichung zwischen Ist- und Modellgierrate zusätzlich durch einen Faktor gewichtet wird, der modellgieratengeschwindigkeitsabhängig berechnet wird. Je schneller die Modellgierratenänderung, desto kleiner wird der Faktor, der jedoch immer >0 ist. Der Faktor wird mit dem Differenzwert bzw. Differenzwertsignal multipliziert, sodass bei schneller Änderung der Modellgierrate ein kleiner Differenzwert resultiert, die Erkennung also nur bei extremen Schwingungen erlaubt, sonst vermieden wird. Dadurch wird berücksichtigt, dass bei schnellen Lenkbewegungen das Fahrzeug dem Fahrzeugmodell nicht mehr folgen kann, sodass die Differenz zwischen Modellgierrate und gemessener Gierrate einen Signalverlauf zeigt, der zu Fehlerkennungen führen würde.

Eine weitere besonders vorteilhafte Ausgestaltung des Verfahrens sieht vor, dass die Anzahl der geforderten Halbwellenanzahl von der Frequenz der Schwingung abhängig ist. Je mehr Halbwellen gefordert werden, desto sicherer wird die Erkennung gegen Fehlerkennungen. Bei kleinen Frequenzen dauert es durch die Forderung großer Halbwellenanzahlen jedoch u.U. zu lange, bis ein Eingriff erfolgen kann. Daher ist es vorteilhaft, bei kleinen Frequenzen schon bei geringen Halbwellenanzahlen einzugreifen, bei hohen Frequenzen jedoch mehr Halbwellen zu fordern.

Eine weitere besonders vorteilhafte Ausgestaltung des Verfahrens sieht vor, dass die geforderten Schwingungsamplituden geschwindigkeitsabhängig sind. Bei hohen Geschwindigkeiten sind Schwingungen kritischer als bei niedrigen. Daher erfolgt bei hohen Gespanngeschwindigkeiten schon bei kleinen Differenzwertschwingungen eine Erkennung, bei niedrigen Geschwindigkeiten dagegen wird die Schwelle angehoben.

Eine weitere besonders vorteilhafte Ausgestaltung des Verfahrens sieht vor, getrennte Ein- und Austrittsschwellen für die Differenzwertamplituden vorzusehen. Ein Eingriff erfolgt erst dann, wenn die Gierrate die hohe Schwelle überschreitet. Im folgenden wird der Eingriff erst dann beendet, wenn eine niedrigere Austrittsschwelle unterschritten wird. Dies gewährleistet, dass es einen definierten Eingriff gibt und es nicht dazu kommt, dass der Regler ständig aktiviert und wieder deaktiviert wird.

Als zweiter Bestandteil der Erkennung beinhaltet das Verfahren ein Modul zur Analyse des Querbeschleunigungsverlaufs. Maxima und Minima des Signals werden ermittelt. Aus den zeitlichen Abständen zwischen Maxima und Minima kann die Frequenz ermittelt werden. Die Frequenz muss etwa der Frequenz des Differenzwertsignals entsprechen. Die Position der Maxima und Minima des Querbeschleunigungssignals wird mit der Position der Maxima und Minima des Differenzwertsignals verglichen. Daraus lässt sich die Phasenverschiebung zwischen Differenzwert und Querbeschleunigung berechnen. Die Phasenlage ist während Fahrten über welliger Fahrbahn anders als bei Fahrten mit schlingernden Gespannen. Bei schlingernden Gespannen ist die Phasenverschiebung klein. Dieses Kriterium wird geprüft und bei einer zu großen Phasenverschiebung die Erkennung eines schlingernden Gespanns verboten.

Eine weitere besonders vorteilhafte Ausgestaltung des Verfahrens sieht vor, durch mehrere zusätzliche Plausibilitätsüberprüfungen der Quersignale Fehlanregelungen zu verhindern. Folgende Signalverläufe sind bei schlingernden Gespannen untypisch und führen daher zur Verhinderung bzw. zum Abbruch von Eingriffen:
- Frequenz der Quersignale verändert sich deutlich (wird signifikant kleiner oder größer).
- Frequenz der Quersignale liegt außerhalb des typischen Frequenzbandes.
- Die Amplitude der Quersignale nimmt stark ab.
- Differenz der Maxima und Minima der Quersignalverläufe ist klein.

Absolutwert des Mittelwerts der Querbeschleunigung liegt zu hoch (extreme Kurvenfahrt; bei solchen Manövern sind schlingernde Gespanne unplausibel).

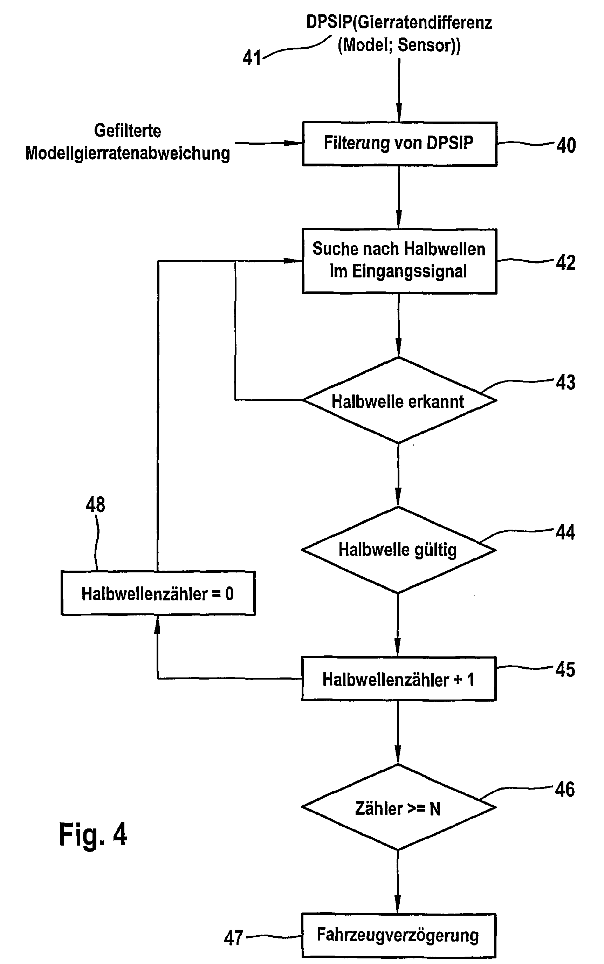

Figur 4 zeigt vereinfacht die logischen Abläufe bei der Regelung:

Ausgehend von der im ESP-Fahrzeugmodell (siehe beispielsweise die Fahrstabilitätsregelung gemäß Fig.1 und 2 sowie deren Beschreibung in DE 195 15 056, die Bestandteil dieser Anmeldung sein soll) ermittelten Gierratendifferenz 41(ΔΨ̇) aus Modell- und gemessener Gierrate, wird in Schritt 40 der Differenzwert 41 gefiltert. Das heißt, dass der Differenzwert 41 einen Tiefpass durchläuft, so daß keine extremen Spitzen auftreten. Schritt 42 umfasst die Suche nach Halbellen im Eingangssignal, die anhand zweier Nulldurchgänge, einem Maximum, einer Mindestamplitude und einer definierten Anfangssteigung analysiert werden. In der Raute 43 wird abgefragt, ob die Halbwelle erkannt wurde. Ist dies nicht der Fall, wird auf Schritt 42 zurückgeschaltet und die Suche nach Halbwellen fortgesetzt. Wurde die Halbwelle anhand der vorstehenden Kriterien erkannt, wird diese in Raute 44 auf ihre Gültigkeit hin überprüft. Dazu werden folgende Kriterien abgefragt:
■ das Maximum der Halbwelle muß einen bestimmten Wert überschreiten
■ der Abstand der Nulldruchgänge (Halbwellenlänge) muß im signifikanten Frequenzbereich liegen
■ das Hystereseband muß nach einer bestimmten Zeit verlassen werden
■ ab der zweiten gefundene Welle:
   - die Halbwellenlänge muß mit der vorhergehende übereinstimmen
   - die Querbeschleunigung darf im Mittel nicht größer als ein bestimmter Wert sein
   - die Querbeschleunigung muß im Zeitpunkt des Maximums der Halbwelle das gleiche Vorzeichen haben
   - die Querbeschleunigung muß eine Halbwelle etwa gleicher Dauer aufweisen
   - die Modellgierrate muß im Zeitpunkt des Maximums der Halbwelle das gleiche Vorzeichen haben
   - die Modellgierrate muß um einen gewissen Betrag kleiner sein als die Fahrzeuggierrate

Sind diese Kriterien alle erfüllt ist die Halbwelle gültig und der Halbwellenzähler in Schritt 45 wird inkrementiert. Bei einer deutlichen Amplitudenabnahme (aktuelle Amplitude nur noch X% der vorhergehenden Amplitude) wird der Zähler nicht inkrementiert sondern behält seinen Wert bei, was zu einem späteren Eintritt in die Regelung führen kann. Sind die Kriterien nicht alle erfüllt, wird in Schritt 48 der Halbwellenzähler auf Null zurückgesetzt. In Raute 46 wird festgestellt ob N Halbwellen erkannt sind. Dies löst Schritt 47 eine Verzögerungsreglung des Fahrzeugs aus.

Die Kriterien ermöglichen eine Regelung in Kurvenfahrt und sogar bei Lenkbewegungen des Fahrers.

## Patentansprüche

1. Verfahren zum Stabilisieren eines Gespanns, mit einem Zugfahrzeug und einem durch das Zugfahrzeug bewegten Anhänger, bei dem das Zugfahrzeug im Hinblick auf Schlingerbewegungen überwacht wird und beim Erkennen von tatsächlichem oder erwarteten instabilem Fahrverhalten des Zugfahrzeugs oder Gespanns fahrstabilisierende Maßnahmen ergriffen werden ,wobei die Gierwinkelgeschwindigkeit erfasst und die fahrstabilisierenden Maßnahmen in Abhängigkeit von einem Differenzwert gesteuert werden, der aus der erfassten Gierwinkelgeschwindigkeit und einer modellbasierten Gierwinkelgeschwindigkeit gebildet und nach Kriterien ausgewertet wird, die auf ein instabiles Fahrverhalten hinweisen, **dadurch gekennzeichnet, dass** die Frequenz und die Amplitude jeder Halbwelle des Differenzwertes ermittelt, mit gespeicherten Werten verglichen und in Abhängigkeit von dem Vergleichsergebnis die Schlingerbewegung des Gespanns bewertet wird.

2. Verfahren nach Anspruch 1, **dadurch gekennzeichnet, dass** die Frequenz aus den Nulldurchgängen und der Zeit zwischen zwei Nulldurchgängen des Differenzwertes ermittelt wird.

3. Verfahren nach einem der Ansprüche 1 und 2, **dadurch gekennzeichnet, dass** die Anzahl der Halbwellen des Differenzwertes gezählt werden, bei denen die Amplitude jeder Halbwelle einen Schwellenwert erreicht oder überschreitet und bei denen jede positive und negative Halbwelle der ermittelten Frequenz innerhalb eines durch einen oberen und unteren Schwellenwert definierten Bandes liegt und wobei beim Erreichen oder Überschreiten eines eine Anzahl von Halbwellen wiedergebenden Schwellenwerts fahrstabilisierenden Maßnȧhmen eingeleitet werden.

4. Verfahren nach Anspruch 3, **dadurch gekennzeichnet, dass** der eine Anzahl von Halbwellen wiedergebende Schwellenwert in Abhängigkeit von der Frequenz bestimmt wird.

5. Verfahren nach Anspruch 4, **dadurch gekennzeichnet, dass** bei kleinen Frequenzen der Schwellenwert bei einer geringeren Anzahl von Halbwellen als bei einer hohen Frequenz erreicht oder überschritten wird.

6. Verfahren nach Anspruch 3, **dadurch gekennzeichnet, dass** der die Amplitude wiedergebende Schwellenwert jeder Halbwelle mindestens in Abhängigkeit von Größen bestimmt wird, die die Geschwindigkeit des Zugfahrzeugs oder Gespanns oder Anhängers repräsentieren.

7. Verfahren nach Anspruch 6, **dadurch gekennzeichnet, dass** bei Größen, die eine hohe Geschwindigkeit beschreiben, der Schwellenwert bei geringeren Amplituden als bei Größen, die eine geringe Geschwindigkeit beschreiben, erreicht oder überschritten wird.

8. Verfahren nach Anspruch 3, 6 oder 7, **dadurch gekennzeichnet, dass** nur eine aufeinanderfolgende Anzahl von Halbwellen des Differenzwertes gezählt werden, bei denen die Amplitude jeder Halbwelle einen Eintrittsschwellenwert erreicht oder überschreitet und dass beim Erreichen oder Unterschreiten nur eines Austrittsschwellenwerts, der unterhalb des Eintrittsschwellenwerts liegt, die fahrstabilisierenden Maßnahmen beendet werden.

9. Verfahren nach einem der Ansprüche 1 bis 8, **dadurch gekennzeichnet, dass** die Daten aus dem Verlauf des Differenzwerts gebildet werden.

10. Verfahren nach einem der Ansprüche 1 bis 9, **dadurch gekennzeichnet, dass** der Differenzwert mit einem Wert gewichtet wird, der in Abhängigkeit von der Lenkwinkelgeschwindigkeit oder Lenkwinkelbeschleunigung oder der modellbasierten Gierwinkelgeschwindigkeit gebildet wird.

11. Verfahren nach einem der Ansprüche 1 bis 10, **dadurch gekennzeichnet, dass** die Querbeschleunigung erfasst und der Verlauf der Querbeschleunigung nach Kriterien ausgewertet wird, die eine Plausibilitätsüberprüfung der Daten ermöglicht, die aus dem Verlauf des Differenzwerts gewonnen und nach Kriterien ausgewertet werden, die auf ein instabiles Fahrverhalten hinweisen.

12. Verfahren nach Anspruch 11, **dadurch gekennzeichnet, dass** die Maxima-- und Minimalwerte der Querbeschleunigung und deren zeitlichen Abstände ermittelt, die Frequenz bestimmt und mit der Frequenz des Differenzwerts verglichen wird.

13. Verfahren nach Anspruch 11, **dadurch gekennzeichnet, dass** das Verfahren beendet bzw. die fahrstabilisierenden Maßnahmen abgebrochen werden, wenn mindestens eine der folgenden Bedingungen erfüllt sind:
Die Frequenz aus einem Quersignal, insbesondere der Querbeschleunigung und/oder dem Differenzwert, erreicht oder über- bzw. unterschreitet einen oberen oder unteren Schwellenwert;
Die Frequenz aus dem Quersignal verändert sich relativ zur Frequenz aus dem Differenzwert hin zu einem oberen oder unteren Grenzwert.
Der Absolutwert des Mittelwerts dem Quersignal überschreitet einen Schwellenwert.
Die Amplitude dem Quersignal verringert sich mit großem Gradienten.
Die Differenz zwischen den Maximal- und Minimalwerten des Quersignals liegt in einem schmalen Band.

14. Verfahren nach einem der Ansprüche 11 bis 13, **dadurch gekennzeichnet, dass** die Phasenverschiebung zwischen der Querbeschleunigung und dem Differenzwert ermittelt und nach Kriterien bewertet wird, die eine Bestimmung von Fahrsituationen ermöglichen.

15. Verfahren nach Anspruch 14, **dadurch gekennzeichnet, dass** beim Überschreiten eines Schwellenwerts, der eine große Phasenverschiebung wiedergibt, ein Abbruch der fahrstabilisierenden Maßnahmen bzw. eine Beendigung des Verfahrens eingeleitet wird.

16. Einrichtung zum Stabilisieren eines Gespanns, mit einem Zugfahrzeug und einem durch das Zugfahrzeug bewegten Anhänger, bei dem das Zugfahrzeug im Hinblick auf Schlingerbewegungen überwacht wird und beim Erkennen von tatsächlichem oder erwarteten instabilem Fahrverhalten des Zugfahrzeugs oder Gespanns fahrstabilisierende Maßnahmen ergriffen werden, die eine ESP Fahrstabilitätsregelung aüfweist, mit einem Gierratensensor (26) zum Erfassen der Gierwinkelgeschwindigkeit und einem Fahrzeugmodell (50) zum Bilden einer Referenzgierwinkelgeschwindigkeit,
mit einer Ermittlungseinheit (51), die aus der Gierwinkelgeschwindigkeit und der Referenzgierwinkelgeschwindigkeit einen Differenzwert ermittelt,
mit einer Steuereinheit (28), die fahrstabilisierende Maßnahmen in Abhängigkeit von Daten steuert, die aus dem Verlauf des Differenzwerts gewonnen und nach Kriterien ausgewertet werden, die auf ein instabiles Fahrverhalten hinweisen,
**gekennzeichnet durch** eine Auswertungseinheit, die die Frequenz und die Amplitude jeder Halbwelle des Differenzwertes ermittelt, mit gespeicherten Werten vergleicht und in Abhängigkeit von dem Vergleichergebnis die Schlingerbewegung des Gespanns bewertet.

## Claims

1. Method for stabilizing a vehicle combination, with a towing vehicle and a trailer moved by the towing vehicle, in which the towing vehicle is monitored with regard to rolling movements and, if an actual or expected unstable handling performance of the towing vehicle or of the vehicle combination is identified, measures stabilizing the handling are taken, wherein the yaw velocity is recorded, and the measures stabilizing the handling are controlled as a function of a differential value which is formed from the detected yaw velocity and a model-based yaw velocity and is evaluated in accordance with criteria which indicate an unstable handling performance, **characterized in that** the frequency and the amplitude of each half wave of the differential value are determined and compared with stored values, and the rolling movement of the vehicle combination is assessed as a function of the comparison result.

2. Method according to Claim 1, **characterized in that** the frequency is determined from the zero crossings and the time between two zero crossings of the differential value.

3. Method according to either of Claims 1 and 2, **characterized in that** the number of half waves of the differential value, in which the amplitude of each half wave reaches or exceeds a threshold value and in which each positive and negative half wave of the determined frequency lies within a band defined by an upper and lower threshold value, are counted, and, if a threshold value reproducing a number of half waves is reached or exceeded, measures stabilizing the handling are initiated.

4. Method according to Claim 3, **characterized in that** the threshold value reproducing a number of half waves is ascertained as a function of the frequency.

5. Method according to Claim 4, **characterized in that**, at low frequencies, the threshold value is reached or exceeded at a lower number of half waves than at a high frequency.

6. Method according to Claim 3, **characterized in that** the amplitude-reproducing threshold value of each half wave is ascertained at least as a function of variables which represent the speed of the towing vehicle or vehicle combination or trailer.

7. Method according to Claim 6, **characterized in that**, at variables which describe a high speed, the threshold value is reached or exceeded at lower amplitudes than at variables which describe a low speed.

8. Method according to Claim 3, 6 or 7, **characterized in that** only a consecutive number of half waves of the differential value, at which the amplitude of each half value reaches or exceeds an input threshold value, are counted, and **in that** the measures stabilizing the handling are ended if only an output threshold value lying below the input threshold value is reached or fallen short of.

9. Method according to one of Claims 1 to 8, **characterized in that** the data are formed from the profile of the differential value.

10. Method according to one of Claims 1 to 9, **characterized in that** the differential value is weighted with a value formed as a function of the steering angle speed or steering angle acceleration or of the model-based yaw velocity.

11. Method according to one of Claims 1 to 10, **characterized in that** the transverse acceleration is recorded and the profile of the transverse acceleration is evaluated in accordance with criteria permitting a plausibility check of the data which are obtained from the profile of the differential value and are evaluated in accordance with criteria which indicate an unstable handling performance.

12. Method according to Claim 11, **characterized in that** the maximum and minimum values of the transverse acceleration and the time intervals thereof are determined, and the frequency is ascertained and compared with the frequency of the differential value.

13. Method according to Claim 11, **characterized in that** the method is ended and the measures stabilizing the handling are terminated if at least one of the following conditions is met:
The frequency from a transverse signal, in particular the transverse acceleration and/or the differential value, reaches or exceeds or falls short of an upper or lower threshold value;
The frequency from the transverse signal changes towards an upper or lower limit value relative to the frequency from the differential value.
The absolute value of the average value of the transverse signal exceeds a threshold value.
The amplitude of the transverse signal is reduced with a large gradient.
The difference between the maximum and minimum values of the transverse signal lies within a narrow band.

14. Method according to one of Claims 11 to 13, **characterized in that** the phase displacement between the transverse acceleration and the differential value is determined and is assessed in accordance with criteria permitting handling situations to be ascertained.

15. Method according to Claim 14, **characterized in that**, when a threshold value which reproduces a large phase displacement is exceeded, the measures stabilizing the handling are terminated and an ending of the method is initiated.

16. System for stabilizing a vehicle combination, with a towing vehicle and a trailer moved by the towing vehicle, in which the towing vehicle is monitored with regard to rolling movements and, if an actual or expected unstable handling performance of the towing vehicle or of the vehicle combination is identified, measures stabilizing the handling are taken, said system having an ESP handling stability control, with a yaw rate sensor (26) for recording the yaw velocity, and with a vehicle model (50) for forming a reference yaw velocity, with a determining unit (51) which determines a differential value from the yaw velocity and the reference yaw velocity, with a control unit (28) which controls the measures stabilizing the handling as a function of data which are obtained from the profile of the differential value and are assessed in accordance with criteria which indicate an unstable handling performance, **characterized by** an evaluation unit which determines the frequency and the amplitude of each half wave of the differential value, compares them with stored values and assesses the rolling movement of the vehicle combination as a function of the comparison result.

## Revendications

1. Procédé de stabilisation d'un attelage qui présente un véhicule tracteur et une remorque déplacée par le véhicule tracteur, dans lequel
le mouvement de roulis du véhicule tracteur est surveillé et des dispositions de stabilisation du roulage sont prises au cas où un comportement de roulage effectivement ou potentiellement instable du véhicule tracteur ou de l'attelage est détecté,
la vitesse angulaire de lacet étant détectée et les dispositions de stabilisation de roulage étant commandées en fonction d'une valeur de différence qui est formée entre la vitesse angulaire de lacet détectée et une vitesse angulaire de lacet basée sur un modèle et qui est évaluée selon des critères qui indiquent un comportement instable de roulage,
**caractérisé en ce que**
la fréquence et l'amplitude de chaque demi-onde de la valeur de différence sont déterminées et comparées à des valeurs conservées en mémoire et
**en ce que** le mouvement de roulis de l'attelage est évalué en fonction du résultat de la comparaison.

2. Procédé selon la revendication 1, **caractérisé en ce que** la fréquence des passages de la valeur de différence par zéro et la durée qui s'écoule entre deux passages par zéro sont déterminés.

3. Procédé selon l'une des revendications 1 et 2, **caractérisé en ce que** le nombre des demi-ondes de la valeur de différence pour lesquelles l'amplitude de chaque demi-onde atteint une valeur de seuil ou la dépasse et pour lesquelles chaque demi-onde positive ou négative à la fréquence déterminée est située dans une bande définie par une valeur de seuil supérieure et une valeur de seuil inférieure est compté et **en ce que** des dispositions de stabilisation de roulage sont lancées lorsqu'une valeur de seuil du nombre des demi-ondes est atteinte ou dépassée.

4. Procédé selon la revendication 3, **caractérisé en ce qu'**une valeur de seuil du nombre des demi-ondes est déterminée en fonction de la fréquence.

5. Procédé selon la revendication 4, **caractérisé en ce qu'**aux petites fréquences, la valeur de seuil est atteinte ou dépassée à un nombre de demi-ondes plus petit qu'à une haute fréquence.

6. Procédé selon la revendication 3, **caractérisé en ce que** la valeur de seuil qui indique l'amplitude de chaque demi-onde est déterminée au moins en fonction de grandeurs qui représentent la vitesse du véhicule tracteur, de l'attelage ou de la remorque.

7. Procédé selon la revendication 6, **caractérisé en ce que** pour des grandeurs qui décrivent une haute vitesse, la valeur de seuil est atteinte ou dépassée à de plus petites amplitudes que pour des grandeurs qui décrivent une petite vitesse.

8. Procédé selon les revendications 3, 6 ou 7, **caractérisé en ce qu'**on compte uniquement le nombre de demi-ondes successives de la valeur de différence pour lesquelles l'amplitude de chaque demi-onde atteint une valeur de seuil d'entrée ou la dépasse et **en ce que** si seule une valeur de seuil de sortie située en dessous de la valeur de seuil d'entrée est atteinte ou n'est pas dépassée, les dispositions de stabilisation de roulage sont arrêtées.

9. Procédé selon l'une des revendications 1 à 8, **caractérisé en ce que** les données sont formées à partir de l'évolution de la valeur de différence.

10. Procédé selon l'une des revendications 1 à 9, **caractérisé en ce que** la valeur de différence est pondérée par une valeur qui est formée en fonction de la vitesse angulaire de changement de direction, de l'accélération angulaire de changement de direction ou de la vitesse angulaire de lacet basée sur un modèle.

11. Procédé selon l'une des revendications 1 à 10, **caractérisé en ce que** l'accélération transversale est saisie et l'évolution de l'accélération transversale est évaluée selon des critères qui permettent de vérifier la plausibilité des données obtenues à partir de l'évolution de la valeur de différence et évaluées selon des critères qui indiquent un comportement instable de roulage.

12. Procédé selon la revendication 11, **caractérisé en ce que** les valeurs maximales et les valeurs minimales de l'accélération transversale et leurs écarts temporels sont déterminés et **en ce que** la fréquence est déterminée et est comparée à la fréquence de la valeur de différence.

13. Procédé selon la revendication 11, **caractérisé en ce que** le procédé se termine ou les dispositions de stabilisation de roulage sont interrompues si au moins l'une des conditions suivantes est remplie :
- la fréquence d'un signal transversal, en particulier de l'accélération transversale, et/ou de la valeur de différence atteint, dépasse ou n'atteint pas une valeur de seuil supérieure ou une valeur de seuil inférieure,
- la fréquence du signal transversal varie par rapport à la fréquence de la valeur de différence en direction d'une valeur limite supérieure ou d'une valeur limite inférieure,
- la valeur absolue de la valeur moyenne du signal transversal dépasse une valeur de seuil,
- l'amplitude du signal transversal diminue avec un gradient élevé ou
- la différence entre les valeurs maximales et les valeurs minimales du signal transversal est située dans une bande étroite.

14. Procédé selon l'une des revendications 11 à 13, **caractérisé en ce que** le déphasage entre l'accélération transversale et la valeur de différence est déterminée et évaluée selon des critères qui permettent de déterminer les situations de roulage.

15. Procédé selon la revendication 14, **caractérisé en ce que** lorsqu'une valeur de seuil qui représente un important déphasage est dépassée, les dispositions de stabilisation de roulage sont interrompues ou le procédé est arrêté.

16. Système de stabilisation d'un attelage constitué d'un véhicule tracteur et d'une remorque déplacée par le véhicule tracteur, le mouvement de roulis du véhicule tracteur étant surveillé et des dispositions de stabilisation de roulage étant prises si un comportement effectivement ou potentiellement instable de roulage du véhicule tracteur ou de l'attelage est détecté,
le système présentant :
une régulation ESP de la stabilité de roulage qui présente un détecteur (26) de vitesse de lacet qui détecte la vitesse angulaire de lacet et un modèle (50) du véhicule qui forme une vitesse angulaire de lacet de référence,
une unité de détermination (51) qui détermine une valeur de différence entre la vitesse angulaire de lacet et la vitesse angulaire de lacet de référence,
une unité de commande (28) qui commande des dispositions de stabilité du roulage en fonction de données obtenue à partir de l'évolution de la valeur de différence et évaluées selon des critères qui indiquent un comportement instable de roulage,
**caractérisé par**
une unité d'évaluation qui détermine la fréquence et l'amplitude de chaque demi-onde de la valeur de différence, la compare à des valeurs conservées en mémoire et évalue le mouvement de roulis de l'attelage en fonction du résultat de la comparaison.
